Europäisches Patentamt

European Patent Office

Office européen des brevets

(19)

(11) EP 0 859 223 A1

(12) EUROPEAN PATENT APPLICATION

(43) Date of publication:
19.08.1998 Bulletin 1998/34

(51) Int Cl.6: G01F 23/288

(21) Application number: 98300951.5

(22) Date of filing: 10.02.1998

(84) Designated Contracting States:
AT BE CH DE DK ES FI FR GB GR IE IT LI LU MC
NL PT SE
Designated Extension States:
AL LT LV MK RO SI

(30) Priority: 13.02.1997 GB 9702912

(71) Applicant: British Steel plc
London SE1 7SN (GB)

(72) Inventors:
• Pogmore, Christopher Edward
  Chesterfield, Derbyshire, S43 4HE (GB)
• Marsdon, Edward James
  Thurgoland, Sheffield, S35 7AA (GB)

(74) Representative: Fry, Alan Valentine et al
FRY HEATH & SPENCE
The Old College
53 High Street
Horley Surrey RH6 7BN (GB)

(54) Metal level detection method and apparatus

(57) Apparatus for detecting the level of liquid metal within a mould and the depth of mould powder on the surface of the liquid metal, includes an array of radiation detectors positioned to one side of the mould and extending to positions above and below the expected height of liquid metal and the expected depth of mould powder within the mould. A source of radiation photons is positioned on the mould side opposite to that on which the detector array is positioned, and means are provided for counting the number of incident photons received by each radiation detector or neighbouring detectors in unit time. The number of incident photons received provides a measure of the height of liquid metal and the depth of mould powder within the mould. Signals representative of the measures of liquid metal height and/or mould powder depth may be employed as control signals for controlling automatically or periodically the liquid metal height and/or mould powder depth.

FIG.1.

## Description

This invention relates to apparatus for and a method of detecting the level of liquid metal within a mould. More especially, the invention relates to apparatus for and a method of detecting and thereby controlling the level of liquid steel in a mould, especially a mould fed continuously with liquid steel from a tundish or nozzle of a holding vessel. The invention also relates to apparatus for and a method of detecting the depth or thickness of a layer of mould powder present on the surface of liquid metal within a mould.

It is known to detect the level of molten metal within a mould by measuring the extent to which gamma radiation emitted from an isotope source mounted on one side of a mould is attenuated by molten metal present in the mould. In one known apparatus, a detector head comprising a detector, photomultiplier tube and associated electronics counts gamma radiation photons reaching one side of the mould from a source positioned on the opposite side of the mould. Since the radiation level is reduced by the presence of steel, this apparatus is able to produce an output signal which is proportional to the height of steel within the mould.

The performance of known level detection apparatus is constrained by a number of factors which influence the stability and calibration of the output signals. These include the random nature of radioactive decay which leads to statistical variations in the number of gamma photons detected in unit time by the detector head, changes in source output or mould attenuation, photomultiplier characteristics and the presence of mould powders. Variations in radioactive decay can be offset by increasing the source strength, detector sensitivity or system time constant; such increases tend, however, to have upper limits determined by safety considerations, physical constraints or control system response times.

The performance of photomultiplier tubes is affected by factors such as ambient temperature, operating history and the magnitude of the applied high voltage necessary for their operation. Their outputs cannot, consequently, always be relied upon.

When mould powder is added to the surface of steel in a mould, it produces significant attenuation of gamma radiation, having a density of approximately 50% that of molten steel. Thus, the addition of powder produces an uncalibrated step change in detector output which is readily interpreted as an increase in metal level. This lack of ability to discriminate between steel and mould powder is a limitation common to all current radiometric techniques and devices.

The present invention sets out to provide apparatus for detecting the level of a liquid, especially a liquid metal, in a mould which does not suffer from, or at least alleviates the problems discussed above. The invention also sets out to provide apparatus which can also detect the depth and thickness of mould powder present within a mould.

According to the present invention in one aspect, there is provided apparatus for detecting the level of liquid metal within a mould which comprises an array of radiation detectors positioned to one side of the mould and extending to positions above and below the expected level of liquid within the mould, a source of radiation photons positioned on the mould side opposite to that on which the detector array is positioned, and means for counting the number of incident photons received by each radiation detector or neighbouring detectors in unit time and providing therefrom a measure of the height of liquid metal within the mould.

In another aspect, the invention provides apparatus for detecting the level of liquid metal within a mould and the depth of mould powder on the surface of such liquid metal, the apparatus comprising an array of radiation detectors positioned to one side of the mould and extending to positions above and below the expected height of liquid metal and the expected depth of mould powder within the mould, a source of radiation photons positioned on the mould side opposite to that on which the detector array is positioned, and means for counting the number of incident photons received by each radiation detector or neighbouring detectors in unit time, and providing therefrom measures of the height of liquid metal and the depth of mould powder within the mould. Signals representative of the measures of liquid metal height and/or mould powder depth may be employed as control signals for controlling automatically or periodically the liquid metal height and/or mould powder depth.

Typically, sample times may be within the range 0.1 to 0.5 seconds. The number related data may be transmitted to a computer for processing/ Transmissions of data may be by conventional wiring; transmission by fibre optics or radio may alternatively be used.

In another aspect, the invention provides apparatus for detecting the level of liquid metal within a mould which comprises a linear array of radiation detectors positioned to one side of the mould with the uppermost detector of the array above the desired level of liquid metal within the mould and the lowermost detector below this desired level, a source of radiation photons positioned on the other side of the mould and opposite the linear array, means for generating data representative of the number of photons received by each detector in unit time, and processing means operable to receive the generated data and to derive therefrom output signals representative of the height of liquid metal within the mould.

The output signals may be relayed to control equipment operable to control the rate at which liquid metal is supplied to the mould.

The liquid may be liquid steel and the mould may be a water-cooled continuous casting mould. Mould powders may be present in the mould above the liquid steel.

Preferably, the radiation source is positioned at a level which approximates to the predicted interface between the liquid metal.

The radiation detectors may comprise elements of cadmium zinc telloride.

Each radiation detector may be positioned equi-distant from the radiation source. Thus, the array may be curvilinear over its height. The spacings between individual detectors may be the same or may differ. There may be 50 or more radiation detectors in the array. Each detector may comprise a detector.

The invention will now be described by way of example with reference to the accompanying diagrammatic drawings, in which:-

Figure 1 is a side view in section of apparatus in accordance with the invention;

Figure 2 is a schematic side view of the apparatus shown in Figure 1;

Figure 3 is a block diagram illustrating a detector array of the apparatus illustrated in Figures 1 and 2; and

Figure 4 graphically illustrates the effects of thickness on photon transmission.

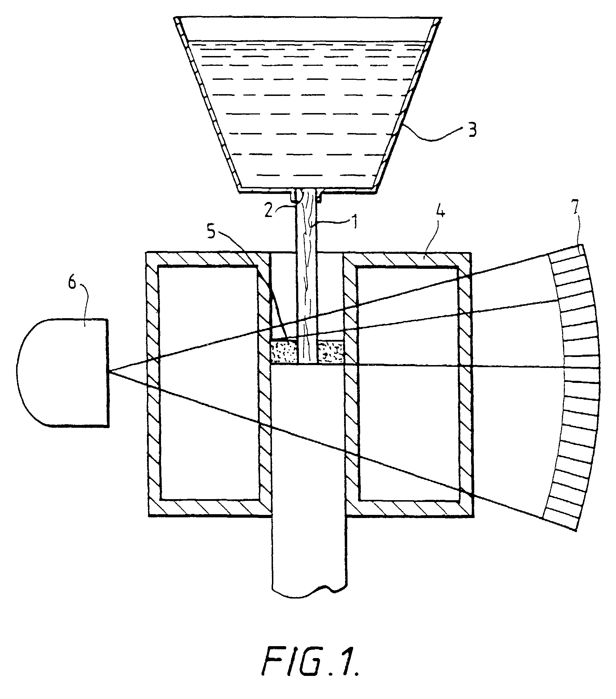

As shown in Figure 1, liquid steel 1 flows as a continuous stream from the nozzle 2 of a tundish 3 into the upper open end of a water cooled mould 4. Mould powder 5 is added periodically or continuously to the mould and forms a blanket on the liquid metal surface. Positioned to one side of the mould 4 is a radiation source comprising an emitter 6 which directs a diverging beam of photons through the mould and onto a linear array of radiation detector elements 7.

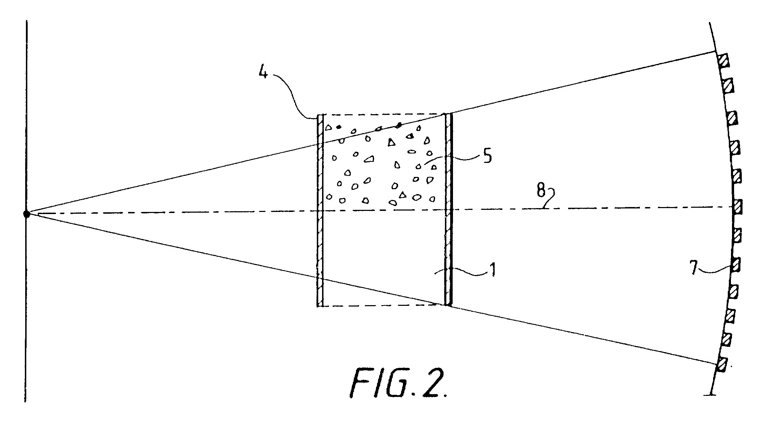

The expected interface between the liquid steel and mould powder (i.e. the level of liquid steel) is shown in Figure 2 by broken line 8. As will be seen from Figure 2, the emitter 6 is positioned substantially level with the interface 8, this having the advantage of minimising the number of radiation photons which pass partly through liquid steel 1 and partly through the mould powder 5, thus giving the sharpest possible discrimination between the two. The span of the beam of radiation photons generated by the emitter 6 is preferably such as to embrace a mould window height of approximately 100mm on the mould side remote from the emitter. For best results, the steel level is controlled to the mid-point of the 100mm detection window. The system may be constructed to produce the control point at other positions along the mould height if desired, and small departures either side of the control point would have little effect on the sharpness of discrimination.

The source of radiation may comprise a Caesium 137 source of gamma radiation. Other frequencies of electromagnetic radiation could be used and other radiation sources may be employed. One such source may comprise an x-ray generator.

As shown, the detectors 7 are equidistant from the gamma emitter 6 and are equi-spaced from one another. They may, however, not be so spaced. Thus, the distances between the detectors towards the centre of the array may be less than the distances between the other detectors. This has the effect of concentrating the detectors in the more critical area of the array. Also, the size of the detectors may vary thereby ensuring greater sensitivity of measurement in critical areas. The detectors 7 are angled to point towards the emitter 6. In this way the maximum volume of each detector element 7 is presented for gamma photon detection.

Equidistancing of the individual detectors from the emitter 5 is achieved, as shown, by adopting a curvilinear array. The array may however take a straight line from, the sensitivity of the individual detectors being varied to compensate for the consequent differences in photon flight paths.

As will be seen from Figure 2, the mould powder 5 present in the mould 4 is within the detection window. Thus, the depth of powder within the mould can readily be established by the array of detectors 7. One reason for the measurement of mould powder depth is to provide a control signal to enable closed loop control of powder feeding. This is not possible with conventional liquid metal level measuring apparatus.

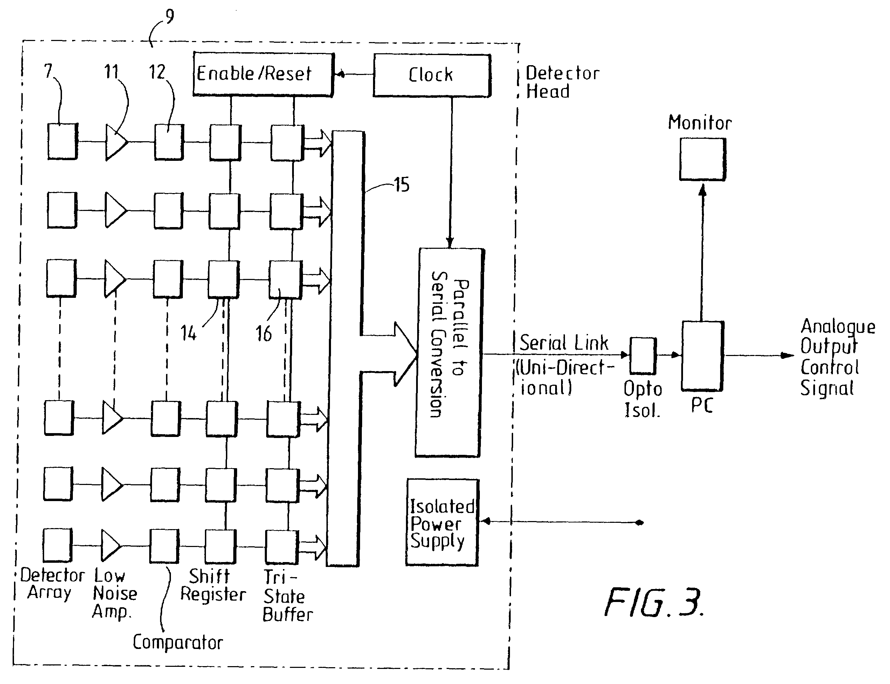

A detector head 9 comprising the several detectors of the array is illustrated in Figure 3. Gamma radiation photons entering the head 9 produce electrical pulses in the detectors 7. These are amplified with low noise amplifiers 11 and passed, via comparators 12, to shift registers 14 which record the number of pulses in unit time. After a preselected time the contents of each register 14 are read, the register is reset and the count information is converted into serial data for transfer to a computer 15. Tristate buffers 16 are provided to permit sequential reading of count information from each detector channel. Manipulation of the numerical data is readily achieved and a graphical display of steel height and mould powder thickness provided.

An output signal is generated for control purposes.

Thus, an output signal may be transmitted to a control system for effecting opening or closing of the nozzle 2 to vary the rate at which liquid steel is supplied to the mould and, therefore, the height of liquid steel within the mould 4. A signal may also be relayed to a control system for controlling the supply of mould powder to the mould.

Synchronising the reading of radiation counts to a multiple of the mould oscillation period improves measurement accuracy. In effect, an integration of incident radiation over an oscillation cycle removes the effects of oscillation from the control signal.

It will be appreciated that for a given thickness of material, the attenuation of gamma radiation is primarily governed by the density of the material through which the radiation passes, according to the formula:

$$I = I_o e^{-\mu_m \rho^t}$$

where

$I_o$ = incident radiation intensity
$\mu_m$ = mass absorption coefficient
$\rho$ = density of material
$t$ = thickness

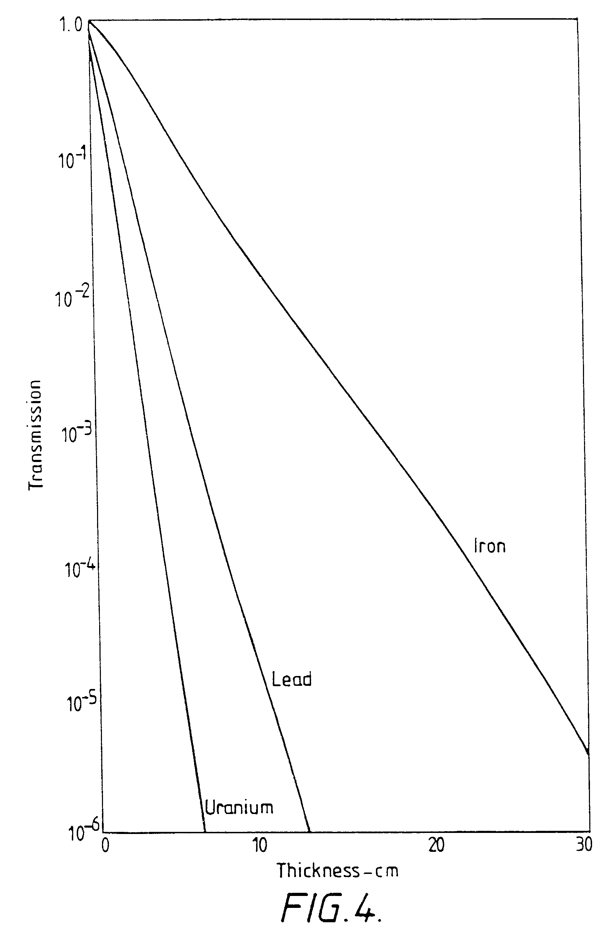

Figure 4 graphically illustrates the attenuation of gamma photons emitted from Caesium 137 (a preferred source material) by various materials, including iron. The data for iron will be very similar to results expected for the attenuation through molten steel, as occurs in moulds used for continuously casting liquid steel (known as "concast" moulds). At a thickness of 100mm, the indicated attenuation factor is 0.02 (i.e. 2% or the original radiation is transmitted).

Based on the dimensions and attenuation factors considered, it has been found that three distinct levels would be produced by either an empty mould, mould powder or molten steel, within the target response time of 0.5 s. Therefore, the depth of the mould powder can be separately determined. However, for greater thicknesses of metal and mould powder the ability to discriminate between the two within the target response time will decrease and a longer response time may be necessary for the determination of mould powder depth.

Irrespective of the means of data processing, two output signals are typically produced, one representing the position of the steel/mould powder interface and the other corresponding to the depth of mould powder. One or both output signals may be analogous or digital in nature.

A reduction in the proportion of background radiation can be achieved by selective screening of the detectors, restricting the input of gamma radiation to the face presented to the source. The use of denser scintillation materials would increase the number of gamma photons detected from both the Caesium 137 and background sources. This would again improve discrimination between steel, mould powder and air.

Changes in mould size and section shape result in varying degrees of attenuation between source and detector. Greater distances of steel or mould powder result in fewer gamma photons being detected in unit time by the array, but increase the percentage differences in signal received through the different materials. Thus, the discrimination of the system improves with larger mould sizes (neglecting background radiation effects), but this is at the expense of response time.

The processing of signals from an array-based detector may be modified and optimised for specific strand sizes. Specifically, the sample times and count thresholds are selected to best suit the particular mode of operation.

Calibration of the system gives rise to similar considerations. It is envisaged that after size changes, or periodically during production, an average counts-per-second figure would be obtained for each element of the detector array with the mould empty of steel and powder.

Whilst the above aspects could be achieved using hardware techniques, it is proposed that the detector head be operated as a transducer and that the resultant numerical information be processed in software, employing a PC or possibly programmable controller. This would greatly enhance flexibility during development and facilitate the adjustment of thresholds and setpoints for changing plant conditions. Longer term optimisation of the control strategy would also be possible without expensive modifications to detector electronics.

From the foregoing it will be appreciated that a successful radiometric detection system based upon a linear array of detectors overcomes the limitations of the present radiometric systems relating to statistical variations of output signal and the inability to discriminate between metal and mould powder.

Also, solid state detectors are available which appear to be suitable for the proposed application and which should yield a greater consistency of performance compared with photomultiplier tubes.

Further, detector elements based on cadmium zinc telluride offer advantages over detector/photodiode combinations.

Calculations of detection rate, based upon the performance of the existing system, suggest that an array detector could produce an indication of mould powder depth, as well as discriminate between powder and steel. Response times would be comparable with the present system.

It will be appreciated that the foregoing is merely exemplary of detection apparatus in accordance with the invention and that modifications can readily be made thereto without departing from the scope of the invention.

## Claims

1. Apparatus for detecting the level of liquid metal within a mould which comprises an array of radiation detectors positioned to one side of the mould and extending to positions above and below the expected level of liquid metal within the mould, a source of radiation photons positioned on the mould side opposite to that on which the detector array is positioned, and means for counting the number of incident photons received by each radiation detector or neighbouring detectors in unit time and providing therefrom a measure of the height of liquid metal within the mould.

2. Apparatus for detecting the level of liquid metal within a mould and the depth of mould powder on the surface of such liquid metal, the apparatus comprising an array of radiation detectors positioned to one side of the mould and extending to positions above and below the expected height of liquid metal and the expected depth of mould powder within the mould, a source of radiation photons positioned on the mould side opposite to that on which the detector array is positioned, and means for counting the number of incident photons received by each radiation detector or neighbouring detectors in unit time, and providing therefrom measures of the height of liquid metal and the depth of mould powder within the mould.

3. Apparatus for detecting the level of liquid metal within a mould which comprises a linear array of radiation detectors positioned to one side of the mould with the uppermost detector of the array above the desired level of liquid metal within the mould and the lowermost detector below this desired level, a source of radiation photons positioned on the other side of the mould and opposite the linear array, means for generating data representative of the number of photons received by each detector in unit time, and processing means operable to receive the generated data and to derive therefrom output signals representative of the height of liquid metal within the mould.

4. Apparatus as claimed in Claim 3 wherein the output signals are relayed to control equipment operable to control the rate at which liquid metal is supplied to the mould.

5. Apparatus as claimed in any one of the preceding claims wherein the liquid is liquid steel and the mould is a water-cooled continuous casting mould.

6. Apparatus as claimed in any one of the preceding claims wherein the radiation source is positioned at a level which approximates to the predicted interface between the liquid metal.

7. Apparatus as claimed in any one of the preceding claims wherein the radiation detectors comprise elements of cadmium zinc telloride.

8. Apparatus as claimed in any one of the preceding claims wherein each radiation detector is positioned equi-distant from the radiation source.

9. Apparatus as claimed in Claim 8 wherein the array is curvilinear over its height.

10. Apparatus as claimed in any one of the preceding claims wherein the spacings between individual detectors is substantially the same.

11. Apparatus as claimed in any one of the preceding claims wherein the detector array comprises at least 50 radiation detectors.

12. Apparatus for detecting the level of liquid metal within a mould substantially as herein described and as described with reference to Figures 1 to 4 of the accompanying diagrammatic drawings.

FIG.1.

*FIG. 2.*

FIG.3.

FIG.4.

**European Patent Office**

**EUROPEAN SEARCH REPORT**

Application Number

EP 98 30 0951

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP 0 658 747 A (RONAN ENGINEERING COMPANY)<br><br>* page 3, line 52 - page 4, line 57; figure 1 *<br>--- | 1-6,10, 12 | G01F23/288 |
| Y | US 3 594 575 A (SHOEMAKER DAVID J)<br><br>* column 2 - column 3; figures 1,2 *<br>--- | 1-6,10, 12 | |
| A | EP 0 432 128 A (VOEST ALPINE IND ANLAGEN)<br>* abstract; figure 1 *<br>--- | 1 | |
| A | US 4 794 256 A (DIMARTINO JOHN M ET AL)<br>* column 4, line 10 - line 16; figure 3 *<br>----- | 1 | |

TECHNICAL FIELDS SEARCHED (Int.Cl.6)

G01F

The present search report has been drawn up for all claims

| Place of search | Date of completion of the search | Examiner |
|---|---|---|
| BERLIN | 4 May 1998 | Vorropoulos, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document